Europäisches Patentamt

European Patent Office

Office européen des brevets

(19)

(11) EP 0 602 555 B1

(12) EUROPÄISCHE PATENTSCHRIFT

(45) Veröffentlichungstag und Bekanntmachung des Hinweises auf die Patenterteilung:
13.05.1998 Patentblatt 1998/20

(51) Int Cl.6: **G02B 5/02**, G02F 1/1335, F21V 9/10

(21) Anmeldenummer: 93119900.4

(22) Anmeldetag: 09.12.1993

(54) **Herstellungsverfahren für Streuscheibe aus milchglasartigem lichthalbdurchlässigem Material, z.B. zur Hintergrundbeleuchtung von LCD-Anzeigen**

Method of producing a diffusing plate made of opal-like semi transparent glassy material for backlighting LCD

Procédé de fabrication d'une plaque diffusante semi-transparente en matériau vitreux à aspect laiteux pour l'éclairage de fond d'éléments d'affichage à cristal liquide

(84) Benannte Vertragsstaaten:
DE FR GB

(30) Priorität: 16.12.1992 DE 4242580

(43) Veröffentlichungstag der Anmeldung:
22.06.1994 Patentblatt 1994/25

(73) Patentinhaber: SIEMENS AKTIENGESELLSCHAFT
80333 München (DE)

(72) Erfinder: Scholz, Michael
D-93051 Regensburg (DE)

(56) Entgegenhaltungen:
JP-U- 2 062 417          US-A- 4 659 183

• CONFERENCE RECORD OF THE 1988 INTERNATIONAL DISPLAY RESEARCH CONFERENCE, Oktober 1988, SAN DIEGO,CA Seiten 52 - 55 K.HINATANI 'FLAT FLUORESCENT LAMP FOR LCD BACK LIGHT'
• PATENT ABSTRACTS OF JAPAN vol. 16, no. 85 (P-1319) & JP-A-03 269 518 (SEIKO EPSON) 2. Dezember 1991
• PATENT ABSTRACTS OF JAPAN vol. 015, no. 485 (M-1188) & JP-A-03 208 205 (SHIN ETSU POLYMER) 11. September 1991

**Beschreibung**

Die Erfindung geht von dem aus DE-U-87 11 933 bekannten Gegenstand aus. Die bekannte Streuscheibe eines Lichtkastens für eine LCD-Anzeigeeinheit weist überall eine konstante Streuscheibendikke auf. Die Streuscheibe ist von hinten über ein Prisma beleuchtet.

Durch das Lehrbuch R. Baer, Beleuchtungstechnik Grundlagen, VEB Verlag Technik Berlin 1990, Seite 22, insbesondere Formel (1.11) und die beiden Textzeilen davor ist die Dickenabhängigkeit der Lichtdurchlässigkeit bzw. der Lichtabsorption von opaken Streuscheiben bekannt. Durch dasselbe Lehrbuch, Seite 239, Abschnitt 2.3.2.5 ist bekannt, daß die Gleichmäßigkeit der Leuchtstärke (= Leuchtdichte) von opaken Scheiben dadurch gewährleistet werden kann, daß man den Abstand der Streuscheibe von der Lichtquelle jeweils ungefähr halb so groß wie den Abstand der verschiedenen Lichtquellen voneinander wählt.

Aus US-A-4 659 183 ist außerdem eine Streuscheibe zur Hintergrund-beleuchtung von LCD-Anzeigen bekannt, durch deren ungleichmäßiges Dickenprofil eine homogene Ausleuchtung erreicht wird.

Der erfindungsgemäß hergestellte Gegenstand eignet sich für eine von hinten beleuchtete LCD-Anzeige eines Kfz-Bordcomputers, aber auch für andere Anordnungen, insbesondere für tragbare Computer, für Fernsehgeräte mit Bildschirmen auf LCD- oder ähnlicher Basis, für Informationstafeln, Reklameträger und für Streuscheiben, die unmittelbar selbst mit Informationen bedruckt sind, die auf einem leuchtenden Hintergrund sichtbar sein sollen.

Die Erfindung befaßt sich mit dem Problem, daß eine gleichmäßige Ausleuchtung der Streuscheibe umso schwieriger wird, je größer und je flacher der von der Streuscheibe bedeckte Lichtkasten ist, und je weniger Lichtquellen in ihm angeordnet sind.

Für den Betrachter ist eine gleichmäßige Helligkeit der von hinten beleuchteten Streuscheibe erwünscht. Diese soll nicht nur in einem abgegrenzten Bereich, sondern bis in die Ecken weitgehend gleichmäßig hell sein.

Der Erfindung liegt die Aufgabe zugrunde, eine möglichst gleichmäßige Leuchtstärke der gesamten Streuscheibenfläche bis in deren äußerste Ränder und Ecken zu erreichen.

Diese Aufgabe wird erfindungsgemäß durch die in den Patentansprüchen 1 und 2 definierten Verfahren gelöst.

Die Erfindung ermöglicht es, einen großen entwicklungs- und kostenintensiven Aufwand zur Vergleichmäßigung der Leuchtstärke der Streuscheibe zu vermeiden, der sonst bei konventionellen Maßnahmen erforderlich wäre. Eine spezielle Gestaltung von Reflektoren im Lichtkasten, speziell entwickelte Wendelabdeckungen an den Lämpchen oder auf die Streuscheibe aufgedruckte Beschichtungen mit ortsabhängig unterschiedlicher Lichtdurchlässigkeit werden durch den erfindungsgemäß hergestellten Gegenstand vermieden.

Die Erfindung wird an einem Ausführungsbeispiel anhand der Zeichnung näher erläutert. Es zeigen

Figur 1        eine Draufsicht auf eine Streuscheibe, auf der Höhenlinien eingetragen sind, und
Figur 2        eine zugehörige Seitenansicht der Streuscheibe.

Beide Figuren zeigen eine Streuscheibe S, welche durch zwei Lichtquellen von hinten beleuchtet wird. Die Streuscheibe S besteht beispielsweise aus einem milchglasartig lichtdurchlässigen Material mit dem Handelsnamen "Makrolon". Sie dient z.B. zur Hintergrundbeleuchtung von LCD-Anzeigen eines Kfz-Bordcomputers, indem über der erfindungsgemäß gestalteten Streuscheibe S noch die LCD-Anzeige montiert ist, so daß der Betrachter durch die LCD-Anzeigescheibe hindurch auf die Streuscheibe S blickt.

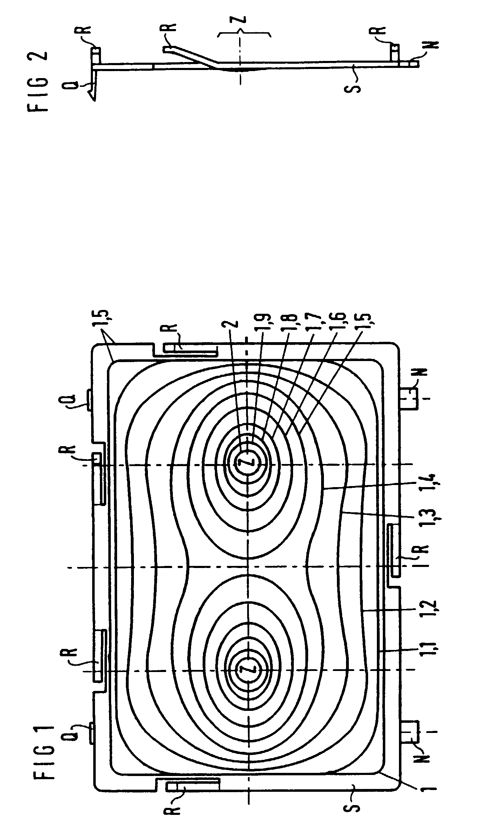

In der Figur 1 sind Höhenlinien für die Streuscheibendicken eingetragen. Sie lassen erkennen, daß die hergestellte Streuscheibe S eine ungleichmäßige Dicke besitzt. Dadurch kann erreicht werden, daß die von hinten beleuchtete Streuscheibe S auf ihrer dem Betrachter zugewandten Seite eine weitgehend gleichmäßige Helligkeit bietet. Die Streuscheibe S besitzt im gezeigten Beispiel an den beiden Zentren Z - d.h., im Bereich der beiden, hinter der Streuscheibe S angeordneten Lichtquellen - eine größere Dicke, wodurch dort eine größere Lichtdämpfung erfolgt. Abseits der Zentren Z besitzt die Streuscheibe S eine vergleichsweise geringere, mit der Entfernung von den Zentren abnehmende Dicke. Durch die unterschiedliche Dicke der Streuscheibe S wird für den Betrachter eine weitgehend gleichmäßige Helligkeit bis in die äußersten Ränder und Ecken der Streuscheibe S erreicht.

In Figur 2 ist andeutungsweise ebenfalls gezeigt, daß die Streuscheibe S im Bereich der Zentren Z dicker ist. Dort ist vor allem aber auch gut erkennbar, daß die Streuscheibe S einen relativ kräftigen Außenrand hat, der in der Figur 1 außerhalb der Höhenlinien liegt. In diesen Außenrand sind parallel zur Streuscheibenebene orientierte Federzungen R, senkrecht dazu orientierte Federzungen Q und Noppen N angebracht, die nur zur Befestigung des Streuscheibe S im Lichtkasten dienen. Im Lichtkasten sind hinter den beiden Zentren Z zwei Glühlämpchen als Lichtquellen angeordnet. Insgesamt kann das gezeigte Beispiel als Spritzgußteil hergestellt sein.

Die Bestimmung der erforderlichen Dicke an einem bestimmten Punkt (und damit an allen Punkten) einer Streuscheibe ist auf mehreren Wegen zu erreichen.

Bei den erfindungsgemäß hergestellten Streuscheiben wird von einer näherungsweise linearen Beziehung zwischen Streuscheibendicke a und Lichtdurchlässigkeit s ausgegangen. Geht man von zwei nacheinander auf dem Lichtkasten angeordneten Streuscheiben S1 und S2 unterschiedlicher, jeweils konstanter Dicke a1 und a2 (= dünner als a1) aus, von denen die Leuchtstärken s1, s2 (Lichtdurchlässigkeit) Punkt für Punkt in einem vorgegebenen Raster ermittelt und gespeichert wurden, so entspricht das Verhältnis der Differenz der Dicken a1 - a2 beider Streuscheiben an einem beliebigen Punkt der Streuscheibe der Differenz der Leuchtstärken s2 - s1 an diesem Punkt. Die für eine gewünschte Leuchtstärke s0 an diesem Punkt der Streuscheibe S erforderliche Dicke a0 ergibt sich dann aus der Beziehung

$$\frac{\text{Scheibendickendifferenz}}{\text{Leuchtstärkendifferenz}} = \frac{a1 - a2}{s2 - s1} = \frac{a0 - a2}{s2 - s0} \rightarrow$$

$$\rightarrow \frac{a0 - a2}{a1 - a2} = \frac{s2 - s0}{s2 - s1} \rightarrow a0 = a2 + \frac{(a1 - a2) * (s2 - s0)}{s2 - s1}$$

mit

a0 =    für die gewünschte Leuchtstärke s0 erforderliche Streuscheibendicke,
a1 =    Dicke einer ersten, dickeren Streuscheibe S1,
a2 =    Dicke einer zweiten, dünneren Streuscheibe S2,
s0 =    gewünschte gleichmäßige Leuchtstärke,
s1 =    gemessene Leuchtstärke auf der dickeren Streuscheibe,
s2 =    gemessene Leuchtstärke auf der dünneren Streuscheibe.

Auf diese Weise kann man die für eine gewünschte, über die ganze Streuscheibe S konstante Leuchtstärke s0 erforderliche Dicke a0 Punkt für Punkt des vorgegebenen Rasters bestimmen. Die in der Figur 1 gezeigten Höhenlinien wurden auf diese Weise ermittelt, wobei die für die einzelnen Rasterpunkte (-flächen) ermittelten Werte mittels eines Computers errechnet und in die in Figur 1 gezeigten Höhenlinien umgerechnet wurden.

Man kann die Dicke a2 der zweiten, dünneren Streuscheibe S2 von Anfang an so wählen, daß sie der z.B. aus Gründen der mechanischen Festigkeit geforderten endgültigen Dicke a0 der erfindungsgemäßen Streuscheibe S in deren Ecken bzw. am Rande der gleichmäßig hell beleuchteten Streuscheibe entspricht.

Man kann aber auch einen weiteren, einfacheren Weg zur näherungsweisen Ermittlung der für eine gleichmäßige Leuchtstärke s0 erforderlichen Dicke a0 der erfindungsgemäß gestalteten Streuscheibe S beschreiten. In diesem Fall wird nur eine einzige Streuscheibe S1 mit konstanter Dicke benutzt, bei der die Leuchtstärken wie im vorherigen Beispiel Punkt für Punkt in einem vorgegebenen Raster ermittelt und gespeichert wurden. Grob näherungsweise kann man dann unter der Voraussetzung der linearen Beziehung zwischen Streuscheibendicke und Leuchtstärke Punkt für Punkt die für eine gewünschte Leuchtstärke s0 erforderliche Streuscheibendicke a0 nach folgender Formel errechnen:

$$a0 = a1 - \frac{s0 - s1}{m}$$

mit

m =    s/a (aus Datenblatt oder experimentell ermittelte Steigung = Verhältnis von Leuchtstärke s zu Dicke a des verwendeten Materials der Streuscheibe.

Die Dicke der Streuscheibe S kann sprungartig, also von Höhenlinie zu Höhenlinie in diskreten Stufen geändert werden, wodurch mehr oder weniger auffällige Schattenbildungen an diesen Sprungstellen nicht zu vermeiden sein werden. Man kann die Streuscheibe S aber auch so gestalten, daß sie mit zunehmendem Abstand zur Lichtquelle, also mit zunehmendem Abstand von den Zentren Z, eine kontinuierlich abnehmende Dicke aufweist.

Die Streuscheibe S kann z.B. in Kunststoff-Spritzguß hergestellt werden, was sich besonders gut für eine Massenfertigung eignet.

Die Vorteile der erfindungsgemäß hergestellten Streuscheibe S kommen besonders gut zur Geltung, wenn der Lichtkasten eine Tiefe besitzt, die wesentlich kleiner als die Diagonale der Streuscheibe S ist. Dann zeigt sich besonders deutlich, daß durch die erfindungsgemäße Gestaltung der Streuscheibe S nicht mehr nötig ist, schattenbildende Abdeckungen der Glühlampenwendel anzubringen, um eine gleichmäßige Leuchtstärke zu erreichen.

**Patentansprüche**

**1.** Verfahren zum Herstellen einer Streuscheibe (S) aus lichtdurchlässigem Material für eine von wenigstens einer Lichtquelle durchleuchtete Fläche einer Anzeigeeinheit, bei dem die Dicke (a0) der Streuscheibe (S) mindestens teilweise Punkt für Punkt in einem vorgegeben Raster ermittelt wird und an einem beliebigen Punkt bei einer gewünschten, auf der Streuscheibe konstanten Leuchtstärke (s0) bestimmt wird durch

$$a0 = a2 + \frac{(a1 - a2)}{s2-s1} * (s2-s0)$$

wobei

a1 = Dicke einer ersten, konstant dicken Streuscheibe (S1);
a2 = Dicke einer zweiten, konstant dicken Streuscheibe (S2), mit a2 < a1;
s1 = Leuchtstärke, die sich an diesem beliebigen Punkt auf der ersten Streuscheibe (S1) bei der Durchleuchtung mit der wenigstens einen Lichtquelle ergibt;
s2 = Leuchtstärke, die sich an diesem beliebigen Punkt auf der zweiten Streuscheibe (S2) bei der Durchleuchtung mit der wenigstens einen Lichtquelle ergibt.

2. Verfahren zum Herstellen einer Streuscheibe (S) aus lichtdurchlässigem Material für eine von wenigstens einer Lichtquelle durchleuchtete Fläche einer Anzeigeeinheit, bei dem die Dicke (a0) der Streuscheibe (S) mindestens teilweise Punkt für Punkt in einem vorgegebenen Raster ermittelt wird und an einem beliebigen Punkt bei einer gewünschten, auf der Streuscheibe konstanten Leuchtstärke (s0) bestimmt wird durch

$$a0 = a1 - \frac{s0 - s1}{m}$$

wobei

a1 = Dicke einer konstant dicken Streuscheibe (S1);
s1 = Leuchtstärke, die sich an diesem beliebigen Punkt der Fläche auf der Streuscheibe (S1) bei der Durchleuchtung mit der wenigstens einen Lichtquelle ergibt;
m = Steigung s/a bzw. Verhältnis von Leuchtstärke s zu Dikke a des verwendeten Materials der Streuscheibe.

## Claims

1. Method for producing a diffusing panel (S) made from transparent material for a surface, transilluminated by at least one light source, of a display unit, in which the thickness (a0) of the diffusing panel (S) is determined at least partly point by point in a prescribed raster and is determined at an arbitrary point in the case of a desired luminosity (s0), which is constant on the diffusing panel, by means of

$$a0 = a2 + \frac{(a1-a2)}{s2-s1} * (s2-s0)$$

it being the case that

a1 = thickness of a first diffusing panel (S1) of constant thickness;
a2 = thickness of a second diffusing panel (S2) of constant thickness, with a2 < a1;
s1 = luminosity which is produced at this arbitrary point on the first diffusing panel (S1) in the case of transillumination by means of the at least one light source;
s2 = luminosity which is produced at this arbitrary point on the second diffusing panel (S2) in the case of transillumination by means of the at least one light source.

2. Method for producing a diffusing panel (S) made from transparent material for a surface, transilluminated by at least one light source, of a display unit, in which the thickness (a0) of the diffusing panel (S) is determined at least partly point by point in a prescribed raster and is determined at an arbitrary point in the case of a desired luminosity (s0), which is constant on the diffusing panel, by means of

$$a0 = a1 - \frac{s0-s1}{m}$$

it being the case that

a1 = thickness of a diffusing panel (S1) of constant thickness;
s1 = luminosity which is produced at this arbitrary point of the surface on the diffusing panel (S1) in the case of transillumination by means of the at least one light source;
m = the gradient s/a or ratio of the luminosity s to the thickness a of the material used for the diffusing panel.

**Revendications**

1. Procédé de production d'un verre diffusant (S) en matière transparente pour une surface, éclairée par au moins une source de lumière, d'une unité d'affichage, selon lequel l'épaisseur (a0) du verre diffusant (S) est établie, au moins partiellement, point par point suivant un réseau préfixé et est déterminée en un point quelconque, pour une luminosité (s0) voulue qui est constante sur le verre diffusant, par :

$$a0 = a2 + [(a1 - a2) * (s2 - s0)] / (s2 - s1)$$

dans laquelle

a1 = épaisseur d'un premier verre diffusant (S1) à épaisseur constante,
a2 = épaisseur d'un second verre diffusant (S2) à épaisseur constante, avec a2 < a1,
s1 = luminance qui s'obtient en ce point quelconque sur le premier verre diffusant (S1) lors de l'éclairage au moyen d'au moins une source de lumière,
s2 = luminance qui s'obtient en ce point quelconque sur le second verre diffusant (S2) lors de l'éclairage au moyen d'au moins une source de lumière.

2. Procédé de production d'un verre diffusant (S) en matière transparente pour une surface, éclairée par au moins une source de lumière, d'une unité d'affichage, selon lequel l'épaisseur (a0) du verre diffusant (S) est établie, au moins partiellement, point par point suivant un réseau préfixé et est déterminée en un point quelconque, pour une luminosité (s0) voulue qui est constante sur le verre diffusant, par :

$$a0 = a1 - [(s0 - s1) / m]$$

dans laquelle

a1 = épaisseur d'un verre diffusant (S1) à épaisseur constante,
s1 = luminance qui s'obtient en ce point quelconque de la surface sur le verre diffusant (S1) lors de l'éclairage au moyen d'au moins une source de lumière,
m = pente s / a ou rapport de la luminance s à l'épaisseur a de la matière utilisée pour le verre diffusant.

FIG 2

FIG 1